# EUROPÄISCHE PATENTSCHRIFT

(11) **EP 0 802 836 B1**
(45) Veröffentlichungstag und Bekanntmachung des Hinweises auf die Patenterteilung: **13.09.2000**
(21) Anmeldenummer: 96901254.1
(22) Anmeldetag: 10.01.1996
(51) Int. Cl.: B09C 1/02, B08B 3/08, B01D 11/02, B08B 9/027, B08B 3/10

(54) **VORRICHTUNG UND VERFAHREN ZUM AUSWASCHEN VON KONTAMINIERTEM ERDREICH ODER DERGLEICHEN SOWIE ZUM REINIGEN VON FLUIDUMSTRÖMTEN ANLAGENTEILEN ODER DERGLEICHEN**
INSTALLATION AND METHOD FOR WASHING CONTAMINATED SOIL OR SIMILAR MATERIALS AND FOR CLEANING EQUIPMENT PARTS OR SIMILAR COMPONENTS WHICH COME INTO CONTACT WITH FLUIDS
INSTALLATION ET PROCEDE PERMETTANT DE LAVER DE LA TERRE CONTAMINEE OU DES MATERIAUX SIMILAIRES ET DE NETTOYER DES PIECES D'EQUIPEMENTS OU DES COMPOSANTS SIMILAIRES ENTRANT EN CONTACT AVEC DES FLUIDES

(30) Priorität: 10.01.1995 DE 19500299; 08.06.1995 DE 19520392
(43) Veröffentlichungstag der Anmeldung: 29.10.1997
(73) Patentinhaber: Klejdzinski, Karl, 46286 Dorsten (DE); Nienass, Dieter, 21149 Uetersen (DE)
(72) Erfinder: Wübbe, Roland, 45770 Marl (DE); Klejdzinski, Karl, 46286 Dorsten (DE); Gorke, Klaus, 46286 Dorsten (DE); Nienass, Dieter, 21149 Uetersen (DE)
(86) Internationale Anmeldenummer: EP9600087
(87) Internationale Veröffentlichungsnummer: WO9621525

(56) Entgegenhaltungen:
- EP-A- 0 289 875
- EP-A- 0 403 669
- EP-A- 0 487 842
- DE-A- 3 910 842
- DE-A- 3 941 951
- PATENT ABSTRACTS OF JAPAN vol. 15, no. 229 (E-1076) 11. Juni 1991 & JP,A,03 068 138 (FUJITSU) 25. März 1991

## Beschreibung

Die Erfindung betrifft eine Vorrichtung mit den Merkmalen des Oberbegriffs des Anspruchs 1 sowie Verfahren mit den Oberbegriffen der Ansprüche 4 bis 6 und 10.

Beim Waschen von kontaminiertem Erdreich oder dergleichen, also von einem in der Regel aus sehr unterschiedlichen Partikelgrößen zusammengesetzten Material, bei dem die Kontaminationen z. B. aus Kohlenwasserstoffen, polyzyklischen aromatischen Kohlenwasserstoffen (PAK), polychlorierten Biphenylen (PCB), Schwermetallen und/oder ähnlichen Umweltgiften bestehen können, tritt häufig das Problem auf, daß erst nach einer Mehrzahl von Waschvorgängen das zu reinigende Material hinreichend sauber ist. Auch die Dauer des einzelnen Waschvorganges sowie der Verbrauch an Zusätzen zum Waschwasser, wie organischen Lösungsmitteln, Tensiden und anderen, spielt für die Wirtschaftlichkeit des Waschverfahrens eine wesentliche Rolle. Schließlich soll das Kontaminationsproblem nicht von dem zu reinigenden Gut auf das Waschwasser oder die Abluft verlagert werden.

Kritisch für derartige Auswaschprozesse ist auch die chemische und partikelgrößenmäßige Zusammensetzung des durch Auswaschen zu reinigenden Materials. Oftmals enthält das zu reinigende Erdreich einen erheblichen Anteil an schluffigen Bestandteilen. Dieses schluffige Material verhält sich nicht nur beim eigentlichen Waschvorgang sondern auch beim nachfolgenden Abscheiden des Waschwassers problematisch. Das schluffige Material bietet den verschiedenen Verunreinigungen eine große Partikeloberfläche an, auf der sich Schadstoffe absetzen können. Während diese Schadstoffe im Laufe relativ langer Zeiträume, z. B. durch Einsickern langsam in die verschiedenen Schichten des Erdreiches bzw. einzelner Erdstücke eindringen können, soll das Auswaschen in vergleichsweise kurzen Zeiträumen vollzogen werden. Dem steht die Kompaktheit des zu reinigenden Erdreiches insbesondere dann hinderlich im Wege, wenn der Anteil an schluffigen Bestandteilen relativ groß ist.

Aus der EP 0403 669 B1, von der die Erfindung ausgeht, ist es bekannt, das Erdreich in einer oben offenen Mulde, also einem Behälter mit schräg nach oben auseinanderlaufenden Seitenwänden mit Waschwasser, Lösungsmitteln und Wirbelluft zu behandeln. Zu diesem Zweck weist die Mulde einen gelochten Filterboden auf. Diese ist mit zwei stark verzweigten Netzen von jeweils vielen einzelnen, auf die Löcher ausgerichteten Düsen versehen. Die beiden Netze werden von getrennten Einspeiseeinrichtungen zum einen mit Wasser und zum anderen mit Druckluft versorgt. Die Düsen jedes Netzes müssen auf die Löcher des Filterbodens ausgerichtet oder innerhalb der Löcher angeordnet sein, um ihre Strahlwirkung zu entfalten. Für die Entwässerung sind in Löcher des Filterbodens Vakuumfilterkerzen eingesetzt. Die Löcher in dem Filterboden müssen für das Ausrichten bzw. die Aufnahme der Düsen sowie das Einsetzen von Filterkerzen entsprechend groß und weit beabstandet sein. Insgesamt ist ein solcher Boden trotz sehr aufwendiger Verrohrung nicht hinreichend geeignet ein gleichmäßiges Wirbeln bei feinverteilter Anströmung mit Gas und Wasser innerhalb des Waschbehälters zu gewährleisten. Weitere Waschvorrichtungen, die der Erfindung allerdings weniger nahekommen als die EP 0 403 669 B1, sind aus der DE 39 10 842 A1 und der EP 0 487 842 A2 bekannt.

Auch Anlagenteile sind in vielen Anwendungsfällen einem hohen Verschmutzungsgrad ausgesetzt, da sie in feuchter, staubbelasteter Atmosphäre, gegebenenfalls in Anwesenheit verschiedenartiger Gase und/oder anderen organischen oder anorganischen Verunreinigungen zum Einsatz kommen. Ein Beispiel für derartige Anlagenteile sind die Kühlschlangen eines sogenannten Wetterkühlers für den Bergbau, diese werden von einem Kühlmittel, z. B. von einer Kühlsole, durchströmt. An der Rohraußenseite werden die Kühlrohre von dem zu kühlenden Luftstrom, im Bergbau als Wetter bezeichnet, umströmt. Dieser Luftstrom (Wetter genannt) enthält einen hohen Anteil feinteiliger Partikel, wie Kohle und/oder Kreide, kleinste Flüssigkeitströpfchen oder Dämpfe von Ölen, anderen Kohlenwasserstoffen und Wasserdampf. Diese Einsetzsituation führt zu einer raschen Oberflächenverschmutzung der Kühlrohre, welche den Wirkungsgrad des Kühlers nach kurzer Zeit erheblich vermindert. Die Verschmutzungsschicht ist, bedingt durch die Strömungsverhältnisse durch die Zusammensetzung der Verunreinigung außerordentlich dicht und nur sehr schwer entfernbar.

Es ist bekannt, derartige Anlagenteile zur Oberflächenreinigung auszubauen und in einem Reinigungsbad mit Hilfe starker Säuren, wie Salzsäure, im Tauchverfahren zu reinigen. Bei dieser Reinigung wird das Material der Kühlschlangen, in der Regel Kupfer, unter Bildung von Kupferchlorid stark angegriffen. Die Entsorgung der anfallenden Reinigungsbadflüssigkeit ist problematisch. Außerdem werden die zu reinigenden Oberflächen immer zerklüfteter und verschmutzen bei erneutem Einsatz deshalb um so schneller. Bedingt durch den hohen Materialabtrag an den Kühlschlangen kommt es auch häufig zu Undichtigkeiten.

Ziel der Erfindung ist es, bei einem Verfahren und einer Vorrichtung der eingangs genannten Art eine möglichst gründliche Reinigung des Erdreiches vor Ort mit einer, vorzugsweise autarken Waschanlage vornehmen zu können sowie ein schonendes Reinigungsverfahren für fluidumströmte Anlagenteile der eingangs genannten Art anzugeben, das möglichst umweltverträglich ist. Hierzu wird hinsichtlich einer Vorrichtung vorgeschlagen, daß der Boden der Vorrichtung aus mindestens einer Platte aus Metall oder dergleichen besteht, die in im wesentlichen gleichmäßiger Verteilung über ihre gesamte Fläche mit sich nach oben, d. h. zum Waschbehälter hin, verjüngenden Düsen versehen ist und die sowohl an den darübergelegenen Waschbehälter als auch an einen daruntergelegenen Zufluß-/Abflußbehälter fluiddicht anschließt. Erfindungsgemäß ist ferner vorgesehen, daß der Zufluß-/Abflußbehälter mit Zuführorganen zum Einleiten von Waschwasser und von Wirbelgas in den Zufluß-und Abflußbehälter sowie mit Abführorganen zum Abführen von gebrauchtem Waschwasser versehen ist, wobei die Düsen die unmittelbare Verbindung zwischen dem Innenraum des Waschbehälters und dem Innenraum des Zufluß-/Abflußbehälters bilden. Der Zufluß-/Abflußbehälter ist allseitig verschlossen - mit Ausnahme der vorerwähnten Zufluß- und Abführverbindungen und der sich verjüngenden Düsen.

Eine gründliche Verwirbelung des gesamten zu reinigenden Gutes wird weiter gefördert, wenn die Düsen in Randzonen der mindestens einen Platte schräg nach außen geneigt sind.

Die Transportierbarkeit der Waschanlage sowie ihr Betreiben wird dadurch begünstigt, daß der Waschbehälter zumindest teilweise aus Trag- und/oder Aussteifungsrohren und dazwischen sich erstreckenden plattenförmigen Wänden besteht, wobei zumindest ein Teil der Trag- und/oder Aussteifungsrohre mit Zu- und Abflußorganen für Waschwasser bzw. für Wirbelgas versehen ist.

Den vielfältigen Ansprüchen an ein schnelles und gründliches Auswaschen bei Vermeidung neuer Umweltverschmutzungsrisiken wird dadurch genügt, daß man dem Waschwasser mindestens ein organisches Lösungsmittel mit einem oder mehreren isolierten Benzolkernen mit Kohlenwasserstoffseitenketten mit je mindestens drei Kohlenstoffatomen zusetzt. Hierdurch wird unter anderem ein ausreichend hoher Flammpunkt und eine Dichte kleiner als 1 gewährleistet, so daß ein Dekantieren in eine Eluatrinne des Waschbehälters problemlos möglich ist.

Gemäß einer bevorzugten Ausführungsform der Erfindung mit eigenständiger Bedeutung strömt die aus dem Waschbehälter nach dem Waschvorgang abgezogene Waschflüssigkeit von oben nach unten und ein Gas von unten nach oben und/oder quer dazu durch einen mit feinteiligem Adsorptionsmittel gefüllten oder von dem Adsorptionsmittel durchwanderten Behälter. Bei dem Gas kann es sich um gebrauchtes Wirbelgas aus dem Waschvorgang handeln. Bei diesem Vorgang werden im Waschwasser enthaltene Kontaminationen an dem Adsorptionsmittel angelagert bzw. von diesem adsorbiert. In dem Gas enthaltene Kontaminationen werden ebenfalls an dem Adsorptionsmittel abgeschieden. Im übrigen führt das erfindungsgemäße Durchströmen mit Gas zu einer Dispergierung der feinen Adsorptionsmittelpartikel, was die erforderliche Bereitschaft und Fähigkeit zur Aufnahme von Kontaminationen des Waschwassers und gegebenenfalls des Gases herbeiführt und unterstützt.

Hinsichtlich eines Verfahrens zum Auswaschen von kontaminiertem Erdreich oder dergleichen wird des weiteren vorgeschlagen, daß dem Waschwasser mindestens ein organisches Lösungsmittel mit einem oder mehreren isolierten Benzolkernen mit Kohlenwasserstoffseitenketten mit je mindestens drei Kohlenstoffatomen zugesetzt wird. Zum Reinigen von fluidumströmten Anlagenteilen, wie Wärmeaustauschern, insbesondere von Wetterkühlern für den Bergbau, in einem Reinigungsbad wird die Verwendung der Vorrichtung nach Patentanspruch 1 vorgeschlagen, wobei Mittel zum Absaugen bzw. Abführen von gebrauchtem Waschwasser aus dem Zufluß-/Abflußbehälter unter Umständen entbehrlich sind.

Ein besonders bevorzugtes Verfahren zum Reinigen von fluidumströmten Anlagenteilen und dergleichen, wie Wärmeaustauschern, in einem Reinigungsbad zeichnet sich dadurch aus, daß das zu reinigende Anlagenteil in einem Waschbehälter in Anwesenheit von festen feinteiligen Stoffen von einer Strömung aus Flüssigkeit und Gas umwirbelt wird.

Es hat sich herausgestellt, daß dieses Reinigungsverfahren den Einsatz starker Lösungsmittel, insbesondere den starker Säuren, entbehrlich macht und die Aufbereitung des Reinigungsfluides nach erfolgtem Reinigungsvorgang vergleichsweise unproblematisch ist. Die zu reinigenden Anlagenteile werden außerdem nur in geringem Maße durch den Reinigungsvorgang aufgerauht und/oder materialgeschwächt.

Wenn die Badflüssigkeit aus Wasser besteht und ihr eine schwache Säure, insbesondere Essigsäure, zugesetzt wird, wird bereits bei einer sehr geringen Essigsäurekonzentration eine praktisch vollständige Reinigung bei vergleichsweise geringen Entsorgungsproblemen erreicht.

Wenn die im Bad anwesenden festen feinteiligen Stoffe insbesondere aus Sand mit geringen Schluffanteilen bestehen und eine gewisse Scheuerwirkung haben, so wird ohne nennenswerte Oberflächenaufrauhung auch in schwer zugänglichen Oberflächenbereichen eine vollständige Reinigung erzielt.

Zur Aufbereitung des Reinigungsbades kann diesem gebrannter Kalk (CaO) zugesetzt werden. Hierbei entsteht Kalziumazetat.

Dabei können folgende Reaktionen ablaufen:

(1) 2CH₃COOH (wasserfreie Essigsäure) + Cu = Cu(CH₃CO₂)₂ (Kupferazetat) + H₂

Kupferazetat löst sich - bei Raumtemperatur (20°) - zu ca. 7 Prozent in Wasser.

(2) CaO (gebrannter kalk) + H₂O = Ca(OH)₂ (Kalziumhydroxid)

(3) Kupferazetat + Kalziumhydroxid = wasserunlösliches Kupferhydroxid + Kalziumazetat

Kalziumazetat löst sich fünfmal schneller in Wasser als Kupferazetat.

(4) Kupferazetat plus Kreide = Kupfercarbonat + Kalziumazetat

Kupfercarbonat ist unlöslich in Wasser. Eine Kalziumazetatlösung kann problemlos an die Kanalisation abgegeben werden.

Zweckmäßige Ausgestaltungen des Erfindungsgegenstandes, die insbesondere eine besonders effiziente Bodensanierung sowie eine schonende und umweltverträgliche Reinigung und Badentsorgung gewährleisten, sind in weiteren Ansprüchen enthalten.

Die vorgenannten, sowie die beanspruchten und in den Ausführungsbeispielen beschriebenen, erfindungsgemäß zu verwendenden Bauteile bzw. Verfahrensschritte unterliegen in ihrer Größe, Formgestaltung, Materialauswahl und technischen Konzeption bzw. den Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung eines Ausführungsbeispieles unter Bezugnahme auf die Zeichnungen.

In der Zeichnung zeigen:
- Fig. 1a: Eine Bodenplatte für einen Waschbehälter in Draufsicht;
- Fig. 1b: von der Bodenplatte nach Fig. 1a einen Schnitt durch eine zum Waschbehälter hin sich verjüngende Düse (=Kreuzungspunkte des Koordinatengitters);
- Fig. 1c: von derselben Bodenplatte eine zur Plattennormale um 15 Grad geneigte sich verjüngende Düse;
- Fig. 1d: von derselben Bodenplatte eine noch stärker geneigte sich verjüngende Düse;
- Fig. 2: einen Waschbehälterboden in Draufsicht bei fortgenommenen Bodenplatten sowie einem fortgenommenen Trichterelement;
- Fig. 3: von dem Behälterboden nach Fig. 2 ein Vertikalschnitt durch ein Trichterelement;
- Fig. 4: einen Waschbehälter entsprechend den Fig. 1a bis 3 in Ansicht von hinten bei leicht geöffnetem Behälterdeckel - teilweise aufgebrochen;
- Fig. 5: denselben Waschbehälter in Seitenansicht bei leicht geöffneter Entladeklappe;
- Fig. 6: eine komplett auf einem Fahrgestell montierte Erdwaschanlage mit Luft- und Wasseraufbereitung sowie
- Fig. 7: eine schematische Darstellung der Anlage nach Fig. 6.

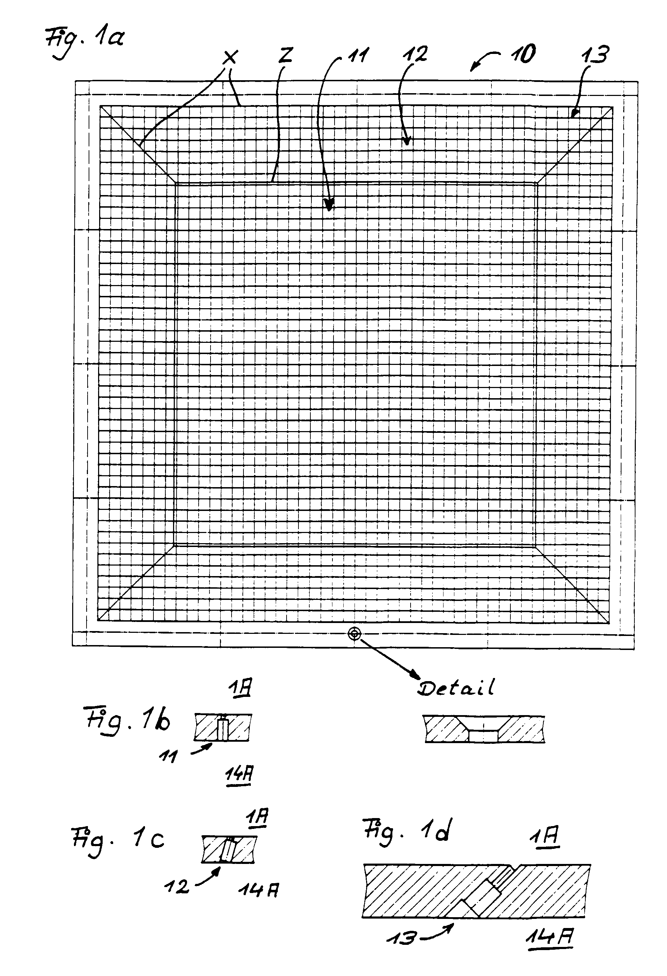

Wie sich aus Fig. 1a bis d ergibt, weist eine erfindungsgemäße Bodenplatte 10 eine Vielzahl von sich verjüngenden Düsen 11 bis 13 auf. Diese sind an den Kreuzungspunkten der in Fig. 1a eingezeichneten Rasterlinien (Koordinatengitter) angeordnet. Im mittleren Feld Z der Bodenplatte 10 werden die Düsen 11 gem. Fig. 1b verwendet. In den Feldern X werden die leicht geneigten Düsen 12 gem. Fig. 1c verwendet, wobei die äußerste Reihe von Düsen 13 stärker geneigt ist, etwa gemäß Fig. 1d. Die Düsen 11 bis 13 werden durch Bohren mit einem ersten Bohrer von z. B. 4 mm Durchmesser hergestellt, wobei diese großen Bohrungen nicht durch die Platte 10 durchgehen sondern schlankere Bohrungen von z. B. 1,5 mm Durchmesser den behälterseitigen Teil der Düse bilden. Hierdurch werden bei einer sehr engmaschigen Verteilung der Düsen hohe Gasgeschwindigkeiten erreicht und eine Verstopfung der Düsen durch feinste Partikel aus dem Waschgut verhindert sowie eine sehr intensive Waschgutdurchwirbelung erreicht. Eine einzelne Bodenplatte kann z. B. eine quadratische Größe von etwa 1 m Kantenlänge aufweisen.

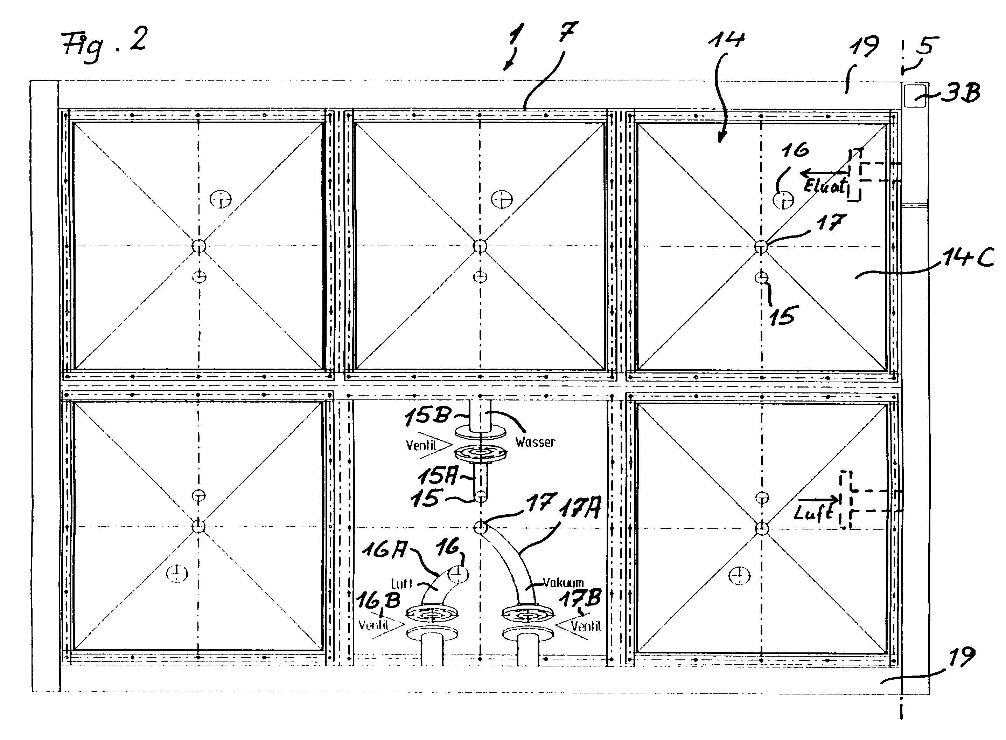

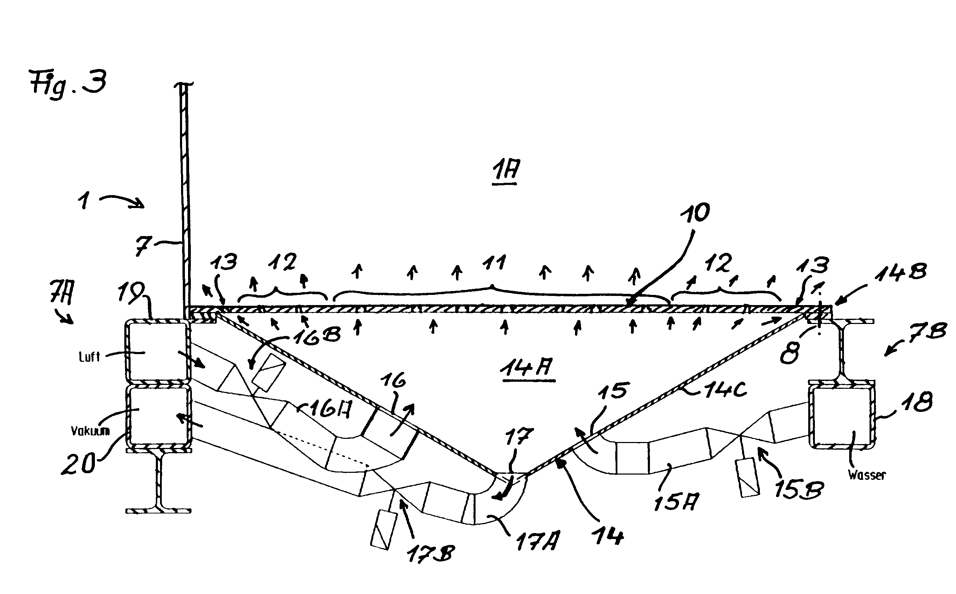

Wie sich aus Fig. 2 und 3 ergibt, ist unterhalb jeder Bodenplatte 10 ein modulartig aufgebauter Trichter vorgesehen, der gemeinsam mit einer Bodenplatte 10 einen Zufluß-/Abflußbehälter 14 bildet. Eine dichte und möglichst kantenfreie Auflage zwischen Bodenplatte 10 und Trichtermodul wird durch eine rahmenartige Gestaltung des oberen, profilierten Trichterrandes 14B gestattet. Bodenplatte und Trichter 14C sind miteinander verschraubbar.

Wie aus Fig. 3 ersichtlich weist jeder Zufluß-/Abflußbehälter 14 eine Eintrittsöffnung 15 für Waschwasser, eine Eintrittsöffnung 16 für Wirbelluft und Austrittsöffnung 17 für Waschwasser auf.

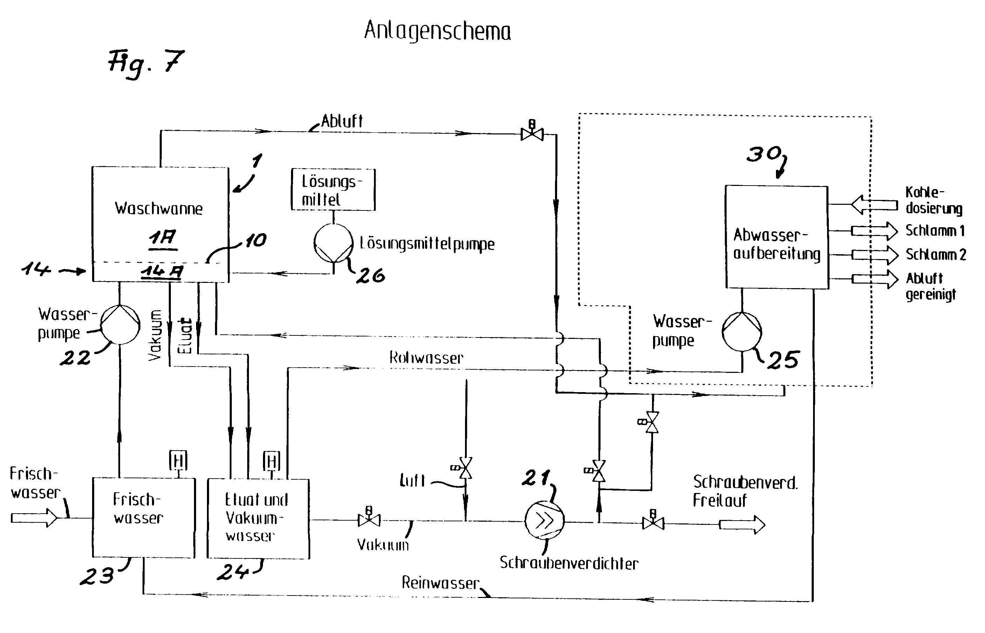

Die Eintrittsöffnung 15 wird durch ein zentrales, den Waschbehälterboden mitabstützendes Zuflußrohr 18 über eine ventilgesteuerte Zuflußleitung 15A, B versorgt. Die Eintrittsöffnung 16 wird über ein Rechteckrohr 19 und eine ventilgesteuerte Zuflußleitung 16A, B mit Wirbelgas versorgt, wobei das Rechteckrohr 19 den Waschbehälterboden umläuft und als Trag- und/oder Aussteifungsrohr des Waschbehälters 1 dient. Entsprechend verhält es sich mit dem, mit dem Rechteckrohr 19 verschweißten, darunterliegenden Rechteckrohr 20, welches an eine zentrale Vakuumpumpe 21 (Fig. 7) angeschlossen ist, über die nach dem Waschvorgang gebrauchtes Waschwasser aus dem Waschbehälter 1 und dem Zufluß-/Abflußbehälter 14 an dessen tiefsten Punkt abgesaugt wird.

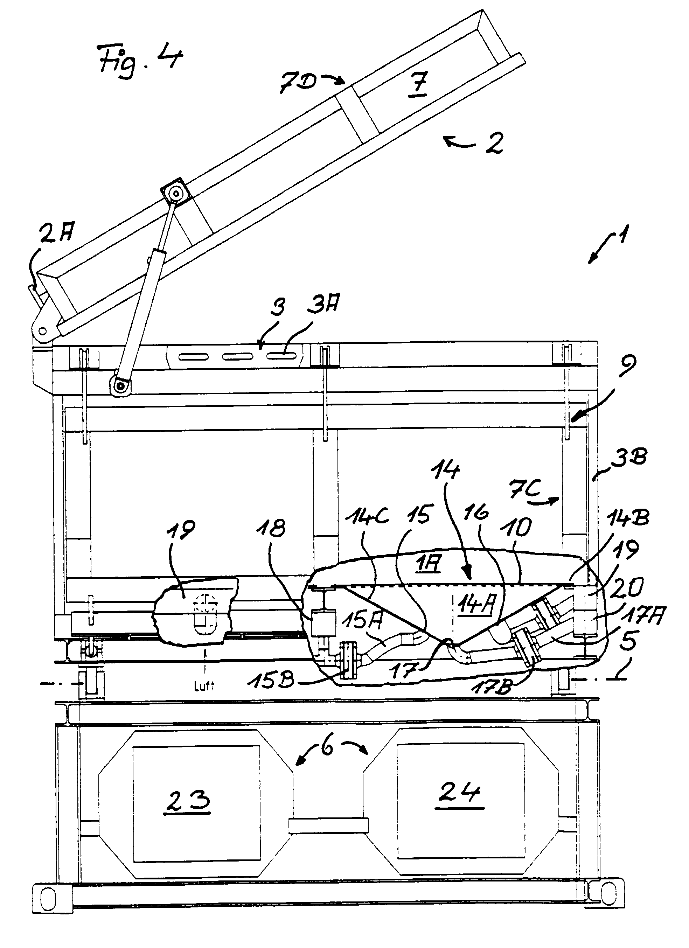

Wie aus Fig. 4 ersichtlich, kann der Waschbehälter 1 bei geöffnetem Behälterdeckel 2 mit zu waschendem Gut gefüllt werden. Während des Waschvorganges ist der Behälterdeckel geschlossen und die Wirbelgase aus dem Deckelbereich werden über einen Rohrleitungsflansch 2A abgeführt. Eine Eluatrinne 3 gestattet über in der Zeichnung angedeutete, behälterinnenseitig vorgesehene Schlitze 3A das Eluat an der oberen hinteren Waschbehälterkante über Trag- oder Aussteifungsrohre 3B, 7C des Waschbehälters 1 aus diesem abzuführen. Die Schlitze 3A können auch relativ groß dimensioniert werden und die Form von Quadraten oder anderen Rechtecken erhalten, insbesondere so breit wie die lichte Höhe des Rohres 3 sein. Zweckmäßigerweise werden sie dann mit einem nasenförmig auskragenden Siebblech überdeckt.

Zum Abführen des Eluats wird der Waschbehälter 1 mittels einer Kolben/Zylindereinheit 4 um eine hintere Querachse 5 geringfügig gekippt. Der Behälterdeckel 2 kann Trag- oder Aussteifungsrohre 7D aufweisen, die - ebenfalls - eine Rahmenstruktur bilden können und Düsen sowie Zuflußleitungen für ein Bedüsen der Waschwasseroberfläche mit Wasser oder einem anderem Fluid für die Oberflächenreinigung oder -spülung aufweisen. Der Rahmen, mit dem die Oberfläche bedüst werden soll ist in den Waschbehälter integriert.

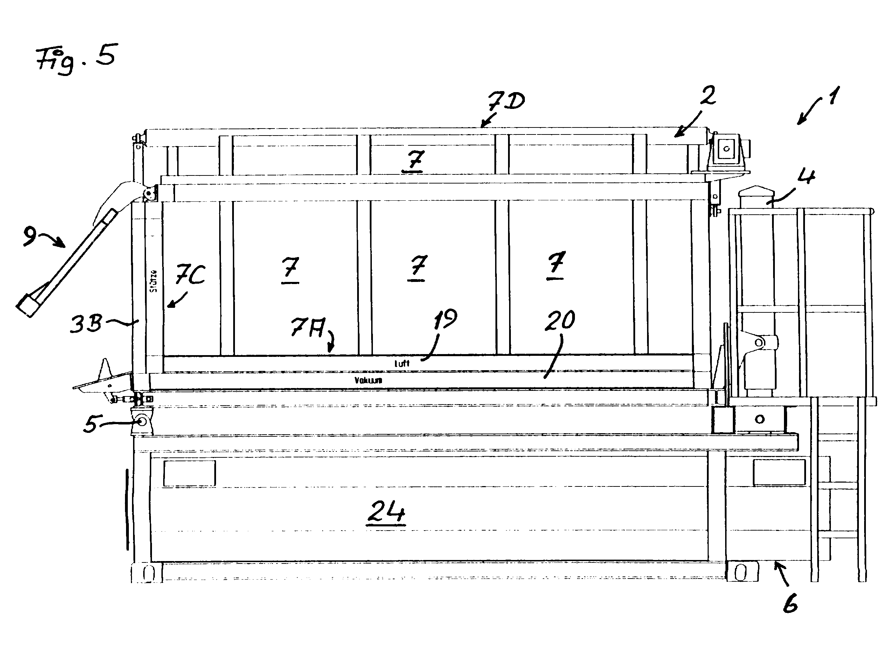

Schließlich sind in Fig. 4 und 5 unterhalb des Waschbehälters Wassertanks 6, 23, 24 für einen autarken Waschbetrieb erkennbar - ebenso eine Entladeklappe 9 für gewaschenes Gut.

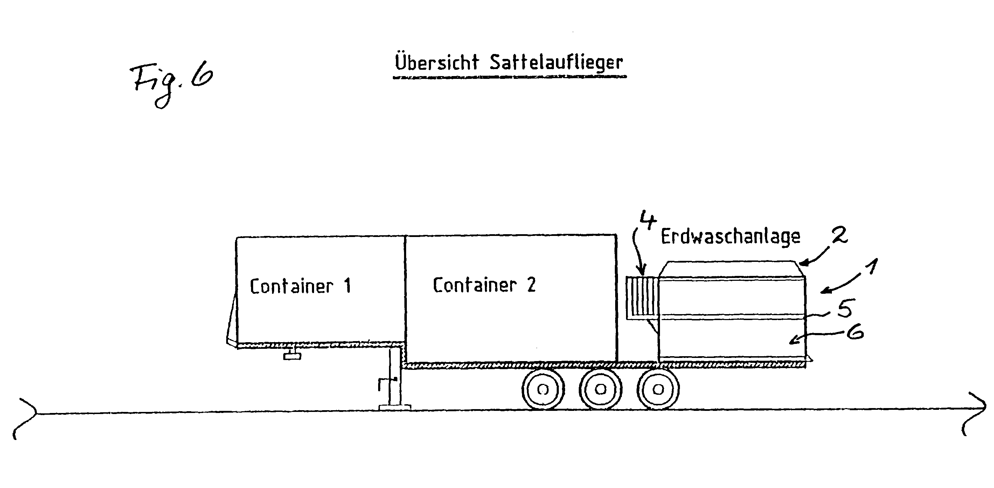

Gemäß Fig. 6 ist außer dem Waschbehälter 1 ein Container für die wichtigsten Aggregate, insbesondere Pumpen und ein weiterer Container für eine Waschwasser- und gegebenenfalls Wirbelgas-Aufbereitung vorgesehen.

Wie im einzelnen aus Fig. 7 ersichtlich, sorgt ein Schraubenverdichter 21 mit Doppelfunktion sowohl für den Abtransport von gebrauchtem Waschwasser als auch - in anderen Betriebsphasen - für die Beaufschlagung des Waschbehälters mit Wirbelgas.

Eine Wasserpumpe 22 saugt aus einem Frischwassertank 23 Waschwasser an und pumpt es vor bzw. nach dem Befüllen des Waschbehälters mit zu reinigendem Gut in diesen über die Zuflußbehälter14 und die Bodenplatten 10 hinein. Eine Lösungsmittelpumpe 26 beaufschlagt die Zuflußbehälter 14 mit erfindungsgemäßen Lösungsmitteln. Das gebrauchte Waschwasser wird in einem Eluat- und Waschwassertank 24 gesammelt. Dieser Tank 24 wird durch den Schraubenverdichter 21 unter Unterdruck gehalten, um die Entwässerung aktiv zu unterstützen. Das im Tank 24 gesammtelte Rohwasser wird über eine Wasserpumpe 25 in eine, insbesondere zweistufige Abwasseraufbereitungsanlage 30 gefördert. In letzterer wird ein feinteiliges Adsorptionsmittel, z. B. aus faserigen und Kohlenstoff enthaltenden Bestandteilen zudosiert und von Abluft aus dem Waschbehälter 1 dispergiert. Auf diese Weise wird Reinwasser, gereinigte Abluft und mindestens eine Schlammfraktion erhalten.

### Ausführungsbeispiel 1:

Das eingesetzte Tensid zur Auswaschung von Mineralkohlenwasserstoffen (MKW) ist ein phosphorhaltiges, amphiphiles Tensid auf der Basis pflanzlicher Rohstoffe.

Das eingesetzte Lösungsmittel für polycyklischen aromatischen Kohlenwasserstoff (PAK) ist ein lineares Alkylbenzol.

Das kontaminierte Material wird nach dem Einfüllen von Frischwasser (ca. 1,5 m³) und den Tensiden oder Lösungsmitteln der Wanne zugeführt. Die Chargengröße (ca. 7 t kontaminiertes Erdreich) wird in ca. 30 Minuten gereinigt.

Während des Reinigungsvorganges sind alle Behälter geschlossen und der während der Reinigung entstehende Luftstrom wird der Wasseraufbereitsungsanlage zugeführt.

Der Deckel des Waschbehälters wird also geschlossen und nach Rückmeldung "Wanne geschlossen" erfolgt der Waschvorgang. Über die Frischwasserpumpe wird die Wanne aufgefüllt. Die Luftverdichter schalten sich ein und der Luftstrom - durch sechs Luftschieber gesteuert - durchwirbelt das eingefüllte Material. Durch eine SPS-Steuerung wird der Einsatz der Luft- und Wasserventile (ca. 30 min.) für den Waschvorgang gesteuert. Die Mischenergie im Waschprozeß wird in Form von Druckluft bereitgestellt, welche das Mischgut in Schwebe hält.

Über Luftblasen, Tenside oder Lösungsmittel und H₂O werden die Verunreinigungen an der Feststoffoberfläche abgelöst und in die flüssige Dispersionsphase überführt. Die Verunreinigungen (organische Phase) bilden mit den Luftblasen eine schaumige Masse, die an der Waschwasser-Oberfläche aufflotiert. Durch den an der Längsseite angebrachten Luftkanal mit Düsenfunktion wird die schaumige Masse der gegenüberliegenden Eluatrinne zugetrieben und dem Vakuumbehälter zugeführt. Der wechselweise Eintrag von Wasser und Luft und das Evakuieren bis zur Klärphase wird durch Sensoren überwacht und durch die SPS-Steuerung gesteuert.

Nach dem Waschvorgang erfolgt der Spülvorgang (ohne Tenside oder Lösungsmittel) mit Luft und Frischwasser. Beim Evakuieren werden Partikel < 0,3 mm und Restwasser dem Vakuumbehälter zugeführt. Durch eine Schlammpumpe erfolgt der Transport zur Wasseraufbereitungsanlage mit Aktivkohle. Der Unterdruck wird durch die Vakuumpumpen über einen Vakuumtank erzeugt und dient zur Trocknung des eingebrachten Materials und zum teilweisen Abtransport des vorhandenen Schluffanteils.

Die im Vakuumbehälter angesammelten Verunreinigungen werden der Wasseraufbereitung zugeführt und durch Aktivkohleschlamm gereinigt. Der stetig anfallende Luftstrom während der Reinigung wird ebenfalls durch den Aktivkohleschlamm geführt.

Das Sanierungsergebnis ist ein biologisch aktiver Boden und somit eine sanfte Sanierungsmethode, die wertvollen Deponieraum erhält. In der Praxis wird ein Sanierungsgrad im Bereich A der Holländischen Liste (100 mg Kohlenwasserstoffe/kg Boden "Spielplatzqualität") erreicht.

Erkennbar werden bei der Erfindung Verschleißteile vermieden. Das zu waschende Gut wird vollkommen gleichmäßig und feinverteilt mit Druckluft verwirbelt. Das bevorzugt verwendete organische Lösungsmittel ist ökologisch unbedenklich, weist eine Dichte deutlich kleiner 1 und einen Flammpunkt deutlich über 50° C auf, ebenso eine hohe Lösekraft für PAKs und PCBs. Es kann ohne Rückgewinnung in einer üblichen Verbrennungsanlage entsorgt werden.

Der Waschbehälter kann sowohl lediglich ein Modul (Bodenplatte und Trichtermodul) als auch eine Mehrzahl von zu einem Waschbehälterboden zusammengefaßten Modulen aufweisen.

Die erfindungsgemäß verwendeten organischen Lösungsmittel können ohne Probleme entsorgt werden, da sie keine Heteroatome wie z. B. Chlor enthalten. Zur Vermeidung von Verdunstungsverlusten des organischen Lösungsmittels wird dessen Dampfdruck möglichst klein gehalten.

### Ausführungsbeispiel 2:

In derselben Waschvorrichtung (Innenmaße: 3 m in der Länge, 2 m in der Breite und 1 m in der Höhe) wurde eine verschmutzte Kupferschlangenkonstruktion (Wärmeaustauscher zur Wetterkühlung) mit einer Länge von 2,2 m, einer Breite von 0,74 m und einer Höhe von 0,80 m in 4,5 m³ Wasser getaucht. Unter leichtem Druckluftsprudeln durch zumindest die Bodenplatte wurden 160 kg 60prozentiger Essigsäure zudosiert. Damit betrug die Essigsäurekonzentration ca. 2 Mol-Prozent. Ebenfalls unter leichtem Druckluftsprudeln wurde der Badflüssigkeit 1,5 m³ Sand mit der Körnung 0/1 mm nach DIN 4226, Teil 1 zugesetzt. Danach wurde mit einem Druck von 3 bar absolut und einem Luftstrom von ca. 25 m³ pro Minute 30 Minuten lang Luft durch die Bodenplatte in den oberhalb der Bodenplatte sich befindenden Waschbehälter eingeblasen.

Nach dem Ausbringen der Kühlschlangenkonstruktion und Abspritzen mit einem Wasserstrahl waren die Kupferrohre (Kühlschlangen) auch in den inneren Bereichen sauber, rot und mattglänzend. Das Waschwasser wies einen PH-Wert von 4,5 auf.

Unter erneutem leichten Druckluftsprudeln wurden portionsweise ca. 5 kg gebrannter kalk zugesetzt und dadurch der PH-Wert auf ca. 7,0 angehoben. Danach wurde die Badflüssigkeit gefiltert. Dem resultierenden Filterkuchen mit einem Gewicht von ca. 2700 kg wurden mit Rammsonden an zehn verschiedenen Stellen Proben von je 500 g Gewicht entnommen. Diese Proben wurden in einem Kneter sorgfältig homogenisiert. Im Salzsäureaufschluß von je dreimal 500 g des homogenisierten Filterkuchens fanden sich im Mittel 0,06 Massen-Prozent Cu +/- 2 Prozent mittlere Abweichung. Im klaren, leicht bräunlich-grünlichen Filtrat fanden sich 50 bis 70 µg/l Cu.

Organische Verunreinigungen von Anlagenteilen können nach dem gleichen Verfahren gereinigt werden. Hierbei wird statt auf Essigsäure auf Lösungsmittel zurückgegriffen, wie sie für die Bodensanierung bereits verwendet wurden. Die organische Phase des Reinigungsbades, die die Verschmutzung enthält, kann von der Oberfläche des Reinigungsbodens nach dem Waschvorgang abgezogen werden.

Prinzipiell ist es auch möglich, anorganische und organische Verschmutzungen gleichzeitig aus dem Reinigungsbad zu entfernen: Die anorganische Verschmutzung wird durch Ausfällung als Filterkuchen gewonnen, während die organische Verschmutzung von der Badoberfläche abgezogen wird.

Ferner ist es denkbar, radioaktiv kontaminierte Geräte und Anlagenteile zu reinigen bzw. zu dekontaminieren. Die hierbei zu entfernenden Kontaminationen können organischen, und/oder anorganischen Ursprungs sein. Bei einer Reinigung von radioaktiven Teilen sind alle Schutzmaßnahmen, die sich aus entsprechenden Vorschriften zum Strahlenschutz ergeben zu beachten.

Eine Automatisierung des Reinigungsvorganges unter Zuhilfename von Robotern ist möglich.

### Bezugszeichenliste

- 1: Waschbehälter
- 1A: Innenraum
- 2: Behälterdeckel
- 2A: Rohrleitungsflansch
- 3: Eluatrinne
- 3A: Schlitze
- 4: Kolben/Zylinder-Einheit
- 5: Querachse
- 6: Wassertanks
- 7: Wände
- 7A: Trag- und/oder Aussteifungsrohre
- 7B: Trag- und/oder Aussteifungsrohre
- 7C: Trag- und/oder Aussteifungsrohre
- 7D: Trag- und/oder Aussteifungsrohre
- 8: Verschraubungslöcher
- 9: Entladeklappe
- 10: Bodenplatte
- 11: Düsen
- 12: Düsen
- 13: Düsen
- 14: Zufluß-/Abflußbehälter
- 14A: Innenraum
- 14B: Trichterrand
- 14C: Trichter
- 15: Eintrittöffnung
- 15A: Zuflußsammelleitung
- 15B: Absperr- und/oder Steuerventil
- 16: Eintrittsöffnung
- 16A: Zuflußsammelleitung
- 16B: Absperr- und/oder Steuerventil
- 17: Austrittsöffnung
- 17A: Abflußsammelleitung
- 17B: Absperr- und/oder Steuerventil
- 18: Zuflußrohr
- 19: Rechteckrohr (Zufluß)
- 20: Rechteckrohr (Abfluß)
- 21: Schraubenverdichter
- 22: Wasserpumpe
- 23: Frischwassertank
- 24: Eluat- und Waschwassertank
- 25: Wasserpumpe
- 26: Lösungsmittelpumpe
- 30: Abwasseraufbereitung
- Z: Feld
- X: Feld

## Patentansprüche

1. Vorrichtung zum Auswaschen von kontaminiertem Erdreich oder dergleichen, sowie zum Reinigen von fluidumströmten Anlagenteilen oder dergleichen,
mit einem Waschbehälter (1) mit, vorzugsweise senkrechten, Seitenwänden (7), vorzugsweise mit einer Eluatkante,
mit einem gelochten Boden mit Düsen für den Eintrag von Waschwasser und Wirbelgas, wie Luft, und Öffnungen zum Absaugen von Waschwasser,
wobei der Boden aus mindestens einer Platte (10) aus Metall oder dergleichen besteht, die in im wesentlichen gleichmäßiger Verteilung über ihre gesamte Fläche mit Düsen (11, 12, 13) versehen ist die sowohl an den Innenraum (1A) des darüber gelegenen Waschbehälters (1) als auch an den Innenraum (14A) eines darunter gelegenen Behälters (14) fluiddicht anschließt,
mit Sammel-Zuführorganen zum Einleiten von Waschwasser (15, 15A, 15B, 18) und von Wirbelgas (16, 16A, 16B, 19) sowie mit einem Sammel-Abführorgan zum Abführen von gebrauchtem Waschwasser (17, 17A, 17B, 20) **dadurch gekennzeichnet,** daß sich die Düsen zum Waschbehälter hin verjüngen daß der Behälter (14) sowohl Zufluß- als auch Abflußbehälter ist, wobei die Düsen (11, 12, 13) die unmittelbare Verbindung zwischen dem Innenraum (1A) des Waschbehälters (1) und dem Innenraum (14A) des Zufluß/Abflußbehälters (14) bilden.

2. Vorrichtung nach Anspruch 1, dadurch gekennzeichnet, daß die Düsen (11, 12, 13) in Randzonen (X) der mindestens einen Platte (10) schräg nach außen geneigt sind.

3. Vorrichtung nach Anspruch 1 oder 2, dadurch gekennzeichnet, daß der Waschbehälter (1) zumindest teilweise aus Trag- und/oder Aussteifungsrohren (7A,7B,7C,7D; 18, 19 20) und dazwischen sich erstreckenden plattenförmigen Wänden (7) besteht und
daß die Trag- und/oder Aussteifungsrohre zumindest teilweise mit Zu- und Abflußorganen für Waschwasser (15, 15A, 15B; 17, 17A, 17B) bzw. für Wirbelgas (16, 16A, 16B) versehen sind.

4. Verfahren zum Auswaschen von kontaminiertem Erdreich oder dergleichen in einem Waschbehälter mit Eluatkante und einem gelochten Boden mit Düsen für den Eintrag von Waschwasser und Wirbelgas und Öffnungen zum Absaugen von Waschwasser unter Verwendung einer Vorrichtung nach einem der Ansprüche 1 bis 3 dadurch gekennzeichnet, daß dem Waschwasser mindestens ein organisches Lösungsmittel mit einem oder mehreren isolierten Benzolkernen mit Kohlenwasserstoffseitenketten mit je mindestens drei Kohlenstoffatomen zugesetzt wird.

5. Verfahren insbesondere nach Anspruch 4, zum Auswaschen von kontaminiertem Erdreich oder dergleichen in einem Waschbehälter mit Eluatkante und einem gelochten Boden mit Düsen für den Eintrag von Waschwasser und Wirbelgas und Öffnungen zum Absaugen von Waschwasser unter Verwendung einer Vorrichtung nach einem der Ansprüche 1 bis 3, dadurch gekennzeichnet, daß die aus dem Waschbehälter nach dem Waschvorgang abgezogene Waschflüssigkeit von oben nach unten und ein Gas von unten nach oben und/oder quer dazu durch einen mit feinteiligem Adsorptionsmittel gefüllten oder von feinteiligem Adsorptionsmittel durchwanderten Behälter strömt.

6. Verfahren zum Reinigen von fluidumströmten Anlagenteilen, wie Wärmeaustauschern, insbesondere von Wetterkühlern für den Bergbau, in einem Reinigungsbad unter Verwendung einer Vorrichtung nach einem der Ansprüche 1 bis 3, dadurch gekennzeichnet, daß, gegebenenfalls nach einer Vorreinigung mit Tensiden oder dergleichen, das zu reinigende Anlagenteil in einem Bad in Anwesenheit von festen feinteiligen Stoffen von einer Strömung aus Flüssigkeit und Gas umwirbelt wird.

7. Verfahren nach Anspruch 6, dadurch gekennzeichnet, daß dem Bad aus Wasser eine schwache Säure, wie Essigsäure, zugesetzt wird.

8. Verfahren nach Anspruch 6 oder 7, dadurch gekennzeichnet, daß dem Bad Sand, insbesondere mit einer Korngrößenverteilung von 0/1 mm nach DIN 4226, Teil 1, zugesetzt wird.

9. Verfahren nach einem der Ansprüche 6 bis 8, dadurch gekennzeichnet, daß zur Aufbereitung des Badinhaltes nach dem Reinigungsschritt gebrannter Kalk (CaO) zugesetzt wird.

10. Verfahren unter Zuhilfenahme der Vorrichtung nach Anspruch 1, bei dem das zu reinigende Material in einem Reinigungsbad von einer Strömung aus Flüssigkeit und Gas umwirbelt wird,
gekennzeichnet dadurch, daß
sowohl die Waschflüssigkeit als auch das Wirbelgas über mindestens einen unter dem Waschbehälter (1) gelegenen Zufluß-/Ablußbehälter (14) über die Düsen (11 - 13) in der Lochplatte dem Waschbehälter zugegeben und über denselben Zufluß-/Abflußbehälter (14) im Wechsel abgezogen wird.

## Claims

1. Contrivance for the washing of contaminated soil or similar and cleaning of fluid-carrying plant parts or similar
with a wash tank (1) with, preferably vertical, side walls (7), preferably with an eluate edge,
with a perforated bottom with nozzles for the admission of wash water and turbulence gas, like air, and openings to extract wash water,
with the bottom consisting of at least one plate (10) of metal or similar, which is equipped with nozzles (11, 12, 13) distributed on the whole uniformly over its complete surface and connected fluid-tight both to the interior (1A) of the wash tank (1) above and to the interior (14A) of a tank (14) below,
with common supply elements for the admission of wash water (15, 15A, 15B, 18) and of turbulence gas (16, 16A, 16B, 19) as well as with a common discharge element for the discharge of used wash water (17, 17A, 17B, 20), thereby characterised that the nozzles leading to the wash tank taper off and that the tank (14) is both supply and discharge tank, with the nozzles (11, 12, 13) constituting the direct connection between the interior (1A) of the wash tank (1) and the interior (14A) of the supply/discharge tank (14).

2. Contrivance according to claim 1, thereby characterised that the nozzles (11, 12, 13) in the edge zones (X) of the at least one plate (10) are inclined obliquely to the outside.

3. Contrivance according to claim 1 or 2, thereby characterised that the wash tank (1) consists at least partially of support and/or stiffener tubes (7A, 7B, 7C, 7D; 18, 19, 20) and of plate-shaped walls (7) extending between them and
that the support and/or stiffener tubes are at least partially equipped with supply and discharge elements for wash water (15, 1SA, 15B; 17, 17A, 17B) and for turbulence gas (16, 16A, 16B).

4. Process for the washing of contaminated soil or similar in a wash tank with eluate edge and a perforated bottom with nozzles for the admission of wash water and turbulence gas and openings for the extraction of wash water using a contrivance according to one of the claims 1 to 3 thereby characterised that at least one organic solvent with one or more isolated benzene nuclei with hydrocarbon side chains with at least three hydrocarbon atoms each is added to the wash water.

5. Process, especially according to claim 4, for the washing of contaminated soil or similar in a wash tank with eluate edge and a perforated bottom with nozzles for the admission of wash water and turbulence gas and openings for the extraction of wash water using a contrivance according to one of the claims 1 to 3, thereby characterised that the wash liquid withdrawn from the wash tank after the washing process flows from top to bottom and a gas from bottom to top and/or transversely to it through a tank filled with fine-particle adsorption agent or with fine-particle adsorption agent passing through it.

6. Process for the cleaning of fluid-carrying plant parts, like heat exchangers, especially of air coolers for the mining industry, in a cleaning bath using a contrivance according to one of the claims 1 to 3, thereby characterised that, possibly after preliminary cleaning with tensides or similar, the plant part that is to be cleaned is treated in a bath in the presence of solid fine-particle substances by a swirling flow of liquid and gas.

7. Process according to claim 6, thereby characterised that a weak acid, like acetic acid, is added to the bath of water.

8. Process according to claim 6 or 7, thereby characterised that sand, especially with a grain size distribution of 0/1 mm according to DIN 4226, Part 1, is added to the bath.

9. Process according to one of the claims 6 to 8, thereby characterised that quick lime (CaO) is added for treatment of the bath contents after the cleaning step.

10. Process using the contrivance according to claim 1 in which the material that is to be cleaned is treated in a cleaning bath by a swirling flow of liquid and gas, thereby characterised that
both the washing liquid as well as the turbulence gas is supplied to the wash tank (1) via at least one supply/discharge tank (14) under the wash tank via the nozzles (11 - 13) in the perforated plate and alternately withdrawn via the same supply/discharge tank (14).

## Revendications

1. Dispositif de lavage de sol contaminé ou autre ainsi que de nettoyage de parties d'installation ou autres étant en contact avec des fluides,
avec un récipient de lavage (1) avec des parois latérales (7), de préférence verticales, de préférence avec un bord éluat,
avec un fond percé avec des buses pour l'entrée d'eau de lavage et de gaz de tourbillonnement, de l'air par exemple, et des orifices pour l'aspiration de l'eau de lavage,
le fond étant constitué au moins par une plaque (10) en métal ou autre, laquelle est munie de buses (11, 12, 13) réparties de manière essentiellement régulière sur toute sa surface et qui est raccordée aussi bien au compartiment intérieur (1A) du récipient de lavage (1) situé au-dessus qu'au compartiment intérieur (14A) d'un réservoir (14) situé au-dessous en étant étanche aux fluides,
avec des éléments de réception et d'alimentation pour l'introduction de l'eau de lavage (15, 15A, 15B, 18) et du gaz de tourbillonnement (16, 16A, 16B, 19) ainsi qu'un élément de réception et d'évacuation pour l'évacuation de l'eau de lavage usée (17, 17A, 17B, 20), caractérisé en ce que les buses s'effilent en direction du récipient de lavage, que le récipient (14) est aussi bien un récipient d'alimentation qu'un récipient d'évacuation, les buses (11, 12, 13) constituant la jonction directe entre le compartiment intérieur (1A) du récipient de lavage (1) et le compartiment (14A) du récipient d'alimentation et d'évacuation (14).

2. Dispositif suivant la revendication 1, caractérisé en ce que les buses (11, 12, 13) sont inclinées obliquement vers l'extérieur dans des zones marginales (X) d'au moins une plaque (10).

3. Dispositif suivant la revendication 1 ou 2, caractérisé en ce que le réservoir de lavage (1) est constitué, au moins partiellement, de tubes porteurs et/ou de tubes raidisseurs (7A, 7B, 7C, 7D ; 18, 19, 20) et de parois (7) en forme de plaque qui s'étendent entre ceux-ci et
que les tubes porteurs et/ou les tubes raidisseurs sont munis, au moins partiellement, d'éléments d'alimentation et d'évacuation pour l'eau de lavage (15, 15A, 15B, 17, 17A, 17B) et pour le gaz de tourbillonnement (16, 16A, 16B).

4. Procédé pour le lavage de sol contaminé ou autre dans un récipient de lavage avec bord éluat et un fond percé avec des buses pour l'entrée d'eau d'alimentation et de gaz de tourbillonnement et des ouvertures pour l'aspiration de l'eau de lavage en utilisant un dispositif suivant l'une des revendications 1 à 3, caractérisé en ce qu'au moins un dissolvant organique, avec un ou plusieurs noyaux benzéniques avec des chaînes latérales hydrocarburées avec au moins trois atomes de carbone chacune, est ajouté à l'eau de lavage.

5. Procédé en particulier suivant la revendication 4, pour le lavage de sol contaminé ou autre dans un récipient de lavage avec bord éluat et un fond percé avec des buses pour l'entrée d'eau d'alimentation et de gaz de tourbillonnement et des ouvertures pour l'aspiration de l'eau de lavage en utilisant un dispositif suivant l'une des revendications 1 à 3, caractérisé en ce que le liquide de lavage retiré du récipient de lavage après le lavage coule de haut en bas et qu'un gaz se répand de bas en haut et/ou transversalement en passant par un récipient rempli d'un absorbant fin ou traversé par un absorbant fin.

6. Procédé de nettoyage de parties d'installation étant en contact avec des fluides, tels les échangeurs de chaleur, en particulier de refroidisseurs d'air dans les mines, dans un bain de nettoyage en utilisant un dispositif suivant une des revendications 1 à 3, caractérisé en ce que suite à un pré-nettoyage éventuel avec des tensides ou aunes, la partie de l'installation à nettoyer est soumise au tourbillonnement d'un courant de liquide et de gaz dans un bain en présence de substances solides fines.

7. Procédé suivant la revendication 6, caractérisé en ce qu'un acide faible, de l'acide acétique par exemple, est ajouté au bain d'eau.

8. Procédé suivant la revendication 6 ou 7, caractérisé en ce que du sable, particulièrement d'une granulométrie de 0/1 mm selon DIN 4226, partie 1, est ajouté au bain.

9. Procédé suivant l'une des revendications 6 à 8, caractérisé en ce que de la chaux brûlée (CaO) est ajoutée pour la préparation du contenu du bain après l'opération de nettoyage.

10. Procédé à l'aide du dispositif suivant la revendication 1, suivant lequel le matériau à nettoyer dans un bain de nettoyage est soumis au tourbillonnement d'un courant de liquide et de gaz, caractérisé en ce que le liquide de lavage et le gaz de tourbillonnement sont amenés dans le récipient de lavage par les buses (11 - 13) situées dans la plaque percée via au moins un récipient d'alimentation et d'évacuation (14) situé au-dessous du récipient de lavage (1) et en sont évacués en alternance via le même récipient d'alimentation et d'évacuation (14).
